# EUROPEAN PATENT APPLICATION

(11) **EP 4 067 219 A1**
(43) Date of publication of application: **05.10.2022**
(21) Application number: 21382255.4
(22) Date of filing: 29.03.2021
(51) Int. Cl.: B62K 15/00, B62K 19/16

(54) **FRAME FOR A FOLDING BICYCLE IN COMPOSITE MATERIAL BY MEANS OF COMPRESSION MOULDING**

(71) Applicant: Muelles Y Ballestas Hispano-Alemanas Projects, S.L., 12540 Villarreal (ES)
(72) Inventor: RUIZ DEALBERT, Miguel, 12540 Villareal (Castellón) (ES); ROS BAS, Jose Manuel, 12540 Villareal (Castellón) (ES); SALAMERO LAORDEN, Juan, 12540 Villareal (Castellón) (ES); ESTAL VERA, Roberto, 12540 Villareal (Castellón) (ES)
(74) Representative: Carlos Hernando, Borja

(57) **Abstract**

Frame for a folding bicycle in composite material by means of compression moulding formed by two portions (1, 2) which can be folded by means of a hinge (6) in order to facilitate the transport and storage thereof. The frame will be manufactured entirely in composite material by means of the manufacturing method known as compression moulding. To do so, different types of materials pre-impregnated with short fibres in random directions known as SMC can be used.

## Description

### OBJECT OF THE INVENTION

The present invention refers to a frame for a folding bicycle formed by two portions which can be folded by means of a hinge in order to facilitate the transport and storage thereof. The frame will be manufactured entirely in composite material by means of the manufacturing method known as compression moulding. To do so, different types of materials pre-impregnated with short fibres in random directions known as SMC can be used.

Additionally, another object of the invention is the specific shape of the frame which omits the traditional tubular structure, replacing it with a flat structure which enables several of the traditional elements of a bicycle frame to be integrated in a single structural element.

### STATE OF THE ART

In the state of the art, the main structure thereof to which the rest of the basic elements of the bicycle are fastened such as the fork, the wheels, the saddle, the handlebar, etc. is known as the frame, framework or chassis of a bicycle.

Traditionally, the frames of the bicycles are based on what is known as a diamond frame with two triangles formed by tubes. A first triangle which encompasses from the saddle to the handlebar and a second triangle which encompasses from the saddle to the rear wheel.

However, in folding bicycles the structure is usually different. In this case, the structure is formed by two main portions joined through a hinge system, which is what enables the bicycle to be folded in two. Generally, the front structure tends to omit the triangle shape and is replaced by a single bar which goes from the hinge to the joint with the tube of the handlebar. In the rear portion, there are different types of structures including the triangular shapes.

As for the materials used for manufacturing the frame, the most traditional and most widely used ones are metallic materials such as steel and aluminium. There are models of bicycle frames in composite material (carbon fibre) but manufactured with traditional manufacturing methods used to manufacture non-folding bicycles, which are manufacturing processes that are complex and expensive with respect to time and materials, such as manual manufacturing processes with prepreg and autoclave. Specifically, these manufacturing methods used to make carbon bicycles involve a manufacturing wherein the carbon prepreg layers are placed in a mould which is subsequently sealed with a vacuum bag and introduced into an autoclave. These methods involve manufacturing in several parts which are joined afterwards, being a very manual process which requires many hours of work.

The applicant is not aware of folding bicycles without a tubular structure manufactured in SMC (Sheet Moulding Compound) by means of compression moulding. The SMC is based on a thermosetting resin matrix, with mineral charges, and reinforced by fibres, mainly made of glass.

The main advantage of this solution of a folding bicycle frame in two single parts of SMC is that it enables a light structure to be achieved by using composite material but maintaining a process which is automated and therefore more efficient than those currently used (which involve secondary processes that complicate and make manufacturing more expensive) and which enables costs to be reduced unlike the current folding bicycles in composite material (including the folding ones). The weights of the frames of current folding bicycles, made of magnesium, aluminium or steel, can range from 3 to 10 kg. Likewise, due to the shape and structure of the frame, the bicycle is more compact once folded than other bicycles with the same traditional folding and frame system.

### DESCRIPTION OF THE INVENTION

The present invention, a frame for a folding bicycle manufactured in composite material by means of compression moulding, refers to a frame for a folding bicycle formed by a front structure and a rear structure joined together through a hinge which enables the folding of one structure on the other. Both structures are made of glass-fibre SMC, with an approximate density of 1.8 g/cm³ or carbon fibre, with a density of approximately 1.4 g/cm³, in different fibre and resin configurations (epoxy, polyester, vinyl ester...). The main advantage of manufacturing the frame in a composite material, instead of traditionally used materials (such as steel) is a weight reduction which can reach 50%, between 1.5 kg and 2 kg, compared to frames made with traditional methods in magnesium, aluminium or steel, and which facilitates the transport thereof. The frame is manufactured using a process known as compression moulding. The process enables, in relation to other folding bikes made of composite material, greater automation, repeatability and a substantial reduction in the production cost of this type of solution.
- Each of the portions of the frame, in other words, the front structure and the rear structure, is manufactured independently and can be manufactured in a different manner, as a hollow structure (by overmoulding) or as a solid structure, according to the requirements specific to the bicycle in terms of stiffness and strength. Each of the structures are preferably manufactured in a single part, and in the case of having more than one part in order to form the structure, the use of adhesives in order to join said parts is avoided. The use of adhesives implies drawbacks since: It requires a surface preparation process of the surfaces to be adhered,
- It requires a secondary adhesion process as well as a curing process of the adhesive, and
- It requires designing the joint system, which implies limitations in the design of the parts by having to consider the adhesive joint.

The front structure of the frame has in the front portion thereof the means for coupling the handlebar and the front fork and in the rear portion thereof, means for coupling to the rear structure of the frame. The rear structure of the frame, moreover, has in the front portion thereof means for coupling to the front structure of the frame, in the rear portion thereof means for coupling the rear wheel of the bicycle and between both ends, means for coupling the seatpost of the saddle and means for coupling the assembly of the chainset. The means at the rear and front ends of the front and rear structures, respectively, for coupling between both structures will preferably be a hinge and to do so they will have a suitable shape. Each of the portions forming part of the hinge can come directly modelled in the front and rear portions, or be an independent part which, preferably mechanically or by means of adhesive, is joined to the respective end thereof of each structure.

The front structure can be formed by a single solid part with a square, circular, flat or I-shaped cross section, without the need to use adhesives in order to join the different parts making up the structure. This structure preferably comprises reinforcing ribs positioned along the structure with the function of adding greater stiffness thereto. The structure would be manufactured in SMC with different combinations of resin and fibre, by means of a compression moulding process. Likewise, the front structure preferably includes the already integrated insert which enables the assembly of the handlebar and front fork to be subsequently positioned. Said insert is preferably integrated during the manufacturing of the structure, thus being integrated into the assembly without requiring any additional operation.

Alternatively, the fact that a hollow structure is present may sometimes be necessary or interesting, depending on the application or use of the bicycle. A hollow structure has the advantage that it has greater inertia both in flexion and torsion, which means that greater structural stiffness can be achieved with less weight. Therefore, in the event that the bicycle needs or requires greater structural stiffness, it is more appropriate to make a hollow structure.

In these cases, to prevent the use of adhesives which are necessary in order to join the two parts forming the structure, the structure is manufactured by means of the overmoulding process. This process has the following advantages:
- It enables a hollow structure with variable thickness to be achieved in an automated process. It enables a resistant core manufactured by another method (RTM, pultrusion etc.) to be had which is subsequently wrapped by the SMC which gives it the final geometry while enabling the placement of metal inserts wrapped by this SMC.

To do so, before the compression moulding, a hollow structure previously manufactured by means of another manufacturing method such as RTM (Resin Transfer Moulding), prepreg, pultrusion, etc., is introduced into the cavity of the mould specifically designed for it, which will be surrounded by SMC during the compression moulding, thus forming a single part with a hollow interior.

This part with a hollow interior can also be replaced by a foam core which acts as the centre of the structure, despite not being hollow, it does weigh considerably less than the exterior thereof. This equips the assembly with structural stiffness by giving the cross section inertia, such that the SMC surrounding the core has all the structural functions.

The rear structure of the frame, which begins at the coupling means with the front frame, specifically at the hinge which acts to join said front frame and ends at the rear dropout wherein the rear wheel of the bicycle will be coupled, it can likewise have different configurations in terms of shape and manufacturing method.

Like the front structure, this rear structure can be formed by a single solid part with a square, circular, flat or I-shaped cross section. As in the front structure, it would preferably be reinforced by means of ribs positioned along the structure with the function of adding greater stiffness thereto. In an exemplary embodiment, the rear structure begins at the hinge and approximately starting from where the tube of the saddle would be located in a traditional diamond frame, the rear structure separates from the axis of symmetry of the bicycle, in other words, changing to a plane parallel to that of the front structure, in order to enable the positioning of the wheel, which would be located in the same plane as the front structure.

The structure is made of SMC, with different combinations of resin and fibre, and is manufactured all at once by means of a compression moulding process.

Likewise, and as occurred with the front portion, the structure of the rear portion can be hollow or include a foam core inside, being manufactured by an overmoulding process.

The rear structure preferably comprises, already integrated therein, the insert or inserts, which enable the chainset, the seatpost of the saddle and the axle of the rear wheel to be subsequently positioned. Said insert, or inserts, are preferably integrated during the manufacturing of the structure, thus being integrated into the assembly without requiring any additional coupling operation.

Once the two structures, front and rear, have been manufactured, the two are coupled through the coupling means arranged to this end, preferably a hinge, in order to have the frame of the folding bicycle object of the present invention.

### DESCRIPTION OF THE FIGURES

In order to complete the description and provide a better understanding of the invention, figures are provided. Said figures form an integral part of the description and illustrate an exemplary embodiment of the invention.
Figure 1 shows a general front image of the frame of the bicycle wherein the structure can be seen distinguishing the different elements forming it.
Figure 2 shows a general top image of the frame of the bicycle, distinguishing some of the elements forming it.
Figure 3 shows an example of a front structure consisting of a solid structure stiffened by means of ribs.
Figure 4 shows an alternative example of a rear structure, consisting of a solid structure stiffened with ribs which surrounds the wheel only on one side with a single rear arm.
Figure 5 shows a cross-sectional view of an alternative structure wherein the hollow central core and the SMC structure which surrounds it can be seen.
Figure 6 shows an alternative structure with a solid core and the SMC structure which surrounds it.

### DETAILED DESCRIPTION OF THE INVENTION

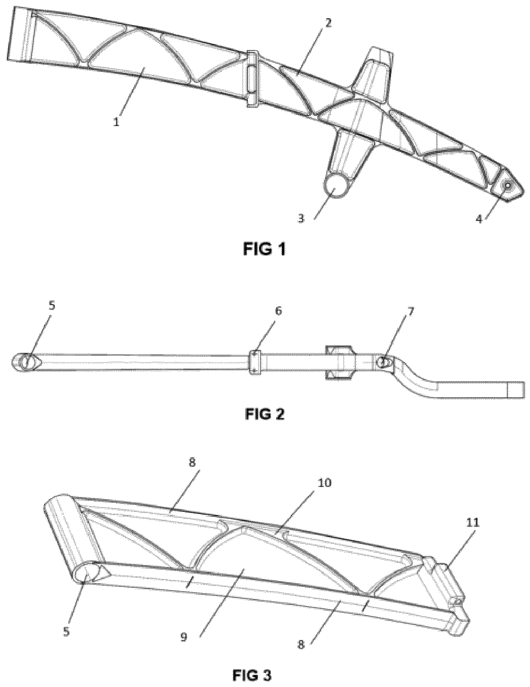

Figure 1 and figure 2 show front and top views of a frame for a folding bicycle formed by a front frame (1) and a rear frame (2) joined by a hinge (6). Figure 2 shows how the rear structure (2), which begins at the hinge, and which approximately from where the tube of the saddle (7) would be located, the rear structure (2) separates from the axis of symmetry of the bicycle, in other words, changing to a plane parallel to the plane of the front structure (1), in order to enable the positioning of the wheel, which would be located in the same plane as the front structure (1).

The frame must be able to house the rest of the main elements of the bicycle which will be placed in the corresponding inserts moulded in the frame. The insert for the front fork (5) is directly integrated into the front structure (1) and is manufactured at the same time as the rest of the structure, enabling the positioning of the fork in the corresponding place thereof. Moreover, the rear structure integrates the inserts for both the chainset (3) and the seatpost of the saddle (7) and for the rear axle of the bicycle (4) which can be closed, as it appears in figure 1, or open, as is common for bicycles and facilitates the assembly and disassembly of the rear wheel in the structure (2). There is a hinge (6) coupling both structures (1) and (2) in order to enable the folding of the frame. Each of the portions forming part of the hinge can come directly modelled in the front (11) and rear (12) portions, or be an independent part which, mechanically or adhesively, is joined to the respective portions thereof.

Figure 3 shows a general view of the front structure (1) in SMC manufactured by means of the method known as compression moulding. This method consists of pre-cutting several sheets of prepreg material which are positioned in a preheated mould and with the application of pressure create the desired shape. This method enables the manufacturing of geometries such as that of the front structure (1) which includes a solid profile made up of a main body (9), an upper and lower profile (8) and a ribbed structure (10) which stiffens the assembly. Furthermore, it is possible that the structure incorporates an insert integrated therein for coupling the front fork (5) and the handlebar, as well as the front portion (11) of the hinge which will enable the folding of the frame, if it is integrated into the structure.

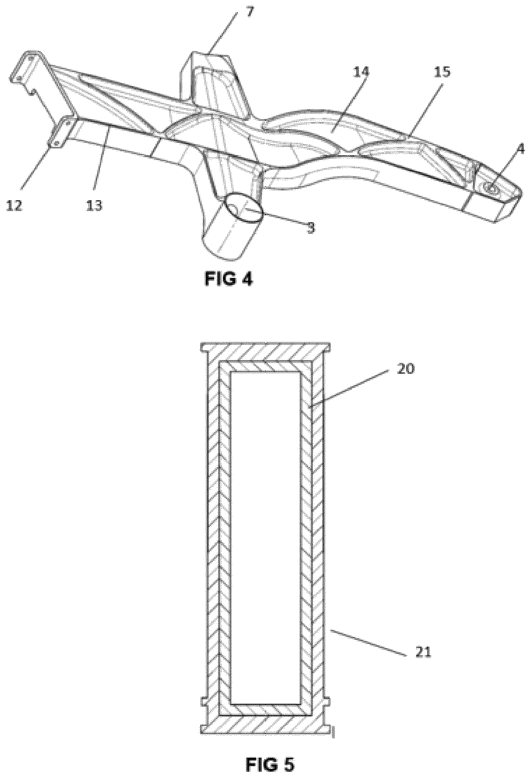

Moreover, figure 4 shows a general view of the rear structure (2) which is also manufactured in SMC and may consist of a geometry like the one proposed in (2) which includes a solid profile with a single arm made up of a main body (14), an upper and lower profile (13) and a ribbed structure (15) which stiffens the assembly. Furthermore, the inserts can be integrated for the subsequent coupling of the chainset (3), the seatpost of the saddle (7), the support of the rear axle (4), and the rear portion (12) of the hinge which enables the folding of the frame if it is integrated into the structure.

Figure 5 shows a cross-sectional view of an alternative front structure to the solid structure described above. In this example, the front structure comprises a central core (20), also made of composite material, but which can be manufactured in SMC or in any other existing method such as RTM, prepreg, pultrusion, etc. This central core (20) is wrapped on all sides by SMC, in this case the entire coating (21) being made of a single piece and manufactured all at once. To do so, the process known as overmoulding is used, wherein the core (20) is introduced into a specifically designed forming mould, together with the SMC sheets which form the preform. With the application of pressure and temperature, the SMC flows filling the entire cavity of the mould and completely surrounding the central core (20) which would be integrated into the centre of the front structure.

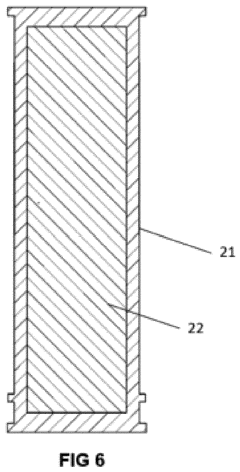

A similar alternative of a front structure is shown in the cross-sectional view of figure 6. In this case, the central core (22) of the front structure is a solid core made of foam, or another low-density material, enabling the overall inertia of the cross section to be increased but without increasing the weight since the amount of SMC used is less in the coating of the core than in the case described wherein the structure is solid and made of SMC. The manufacturing process of the SMC coating would also be overmoulding which was described above.

## Claims

1. A frame for a folding bicycle comprising a front structure (1), a rear structure (2) and a hinge (6) for joining both structures, enabling the folding of one structure on the other, **characterised in that**:
- the front structure has a front end in order to couple a handlebar and a front fork and a rear end in order to be coupled to the rear structure, the structure being a single SMC part and manufactured by means of compression moulding,
- the rear structure has a front end in order to be coupled to the front structure and a rear end in order to couple an axle of a rear wheel, the structure made of a single SMC part being manufactured by means of compression moulding, and
- the hinge comprises a front portion coupled to the rear end of the front structure, a rear portion coupled to the front end of the rear structure and at least one element for joining both portions.

2. The frame according to claim 1, **characterised in that** at least the rear structure is a solid part without hollows therein.

3. The frame according to any of the preceding claims, **characterised in that** the front structure coats a central component or core comprised inside the single part made of SMC.

4. The frame according to any of claims 1 or 2, **characterised in that** the structure has a square, round, flat or I-shaped cross section.

5. The frame according to claim 3, **characterised in that** the core is made of composite material or foam.

6. The frame according to claim 5, **characterised in that** the core is hollow.

7. The frame according to any of the preceding claims, **characterised in that** the rear structure comprises a first insert (7) for coupling the seatpost of the saddle to the frame.

8. The frame according to any of the preceding claims, **characterised in that** the rear structure comprises a second insert (3) for coupling a chainset to the frame.

9. The frame according to any of the preceding claims, **characterised in that** the front structure comprises a first insert (5) for coupling the handlebar and the front fork to the frame.

10. The frame according to claim 1, **characterised in that** the front portion and the rear portion of the hinge form part of the single part of the front structure and the single part of the rear structure, respectively.

11. The frame according to claim 1, **characterised in that** the front portion and the rear portion of the hinge are coupled to the single part of the front structure and to the single part of the rear structure, respectively.

12. The frame according to any of the preceding claims, **characterised in that** the structure has reinforcing ribs.

13. The frame according to any of the preceding claims, **characterised in that** the SMC is made of fibreglass or carbon fibre.
